# EUROPEAN PATENT APPLICATION

(11) **EP 0 955 721 A1**
(43) Date of publication of application: **10.11.1999**
(21) Application number: 98830270.9
(22) Date of filing: 05.05.1998
(51) Int. Cl.: H02P 7/00, H02P 6/08, H02P 6/14

(54) **A method of PWM driving a brushless motor with digitally stored voltage profiles with reduced losses**

(71) Applicant: STMicroelectronics S.r.l., 20041 Agrate Brianza (Milano) (IT)
(72) Inventor: Galbiati, Ezio, 26020 Agnadello (IT); Boscolo, Michele, 30019 Sottomarina (IT); Viti, Marco, 20099 Sesto San Giovanni (IT)
(74) Representative: Pellegri, Alberto

(57) **Abstract**

A method of driving a multiphase brushless motor with N star-connected windings wherein all the N windings are driven according to a certain predefined periodic voltage profile intended as the differential voltage between the winding's terminal and the star center, includes cyclically keeping for a certain time interval one of the N windings in a fixed state of low or high saturation by applying to the other N-1 phase windings instantaneous voltages according to a profile such that the modulated voltage of the star center subtracted or added to the low or high saturation voltage applied to the terminal of said one winding produce a resultant voltage on the winding of a value coherent with said predefined voltage profile.

The number of intervals, in an entire electric period, in which said fixed high or low saturation state of one winding is produced, depends on the predefined driving profile and upon the number N of windings of the motor.

## Description

### FIELD OF APPLICATION OF THE INVENTION

The present invention relates to techniques for driving an electronically DC switched motor usually known as brushless motor.

### BACKGROUND OF THE INVENTION

Usually this type of motors are driven by appropriately exciting the motor's phase windings synchronously with the instantaneous position of the rotor. More precisely, this is done by sequentially exciting two of the motor's windings with positive and negative voltages respectively, leaving a third phase winding in a high impedance state. When a driving "sensorless" brushless motor, the nonexcited phase winding is exploited for detecting the rotor's position.

According to a novel driving technique, described and illustrated in the European patent application No. 96830180.4, filed on 29 March 1996, in the name of the same applicant, on the motor's phase windings are sequentially applied or forced excitation voltages or currents. These currents or voltages rather than having a certain substantially constant level during each switching phase, have a certain profile (that is they have not a constant value) which may be predefined, digitized and stored in a read only memory, such as for instance an EPROM or EEPROM.

The predefined cyclic or alternate profile may be sinusoidal or more generally the result of a Fourier sum of harmonics of a fundamental frequency.

In practice, this innovative driving technique permits to optimize the torque characteristics of the motor by allowing for the predefinition of the most suitable cyclic waveform of the excitation voltage or current that is applied to or forced on the motor's phase windings.

During each switching phase, the driving current or voltage, does not correspond to a certain constant value as it was common in more traditional driving systems, instead it corresponds to certain profile congruent with (a portion of) the whole predefined cyclic or alternate waveform. In other words, during each switching phase, the winding's driving signal level follows precisely a segment of said predefined waveform.

A second European patent application No. 96830190.3, filed on 4 April 1996, in the name of the same applicant, describes an outstandingly efficient technique for synchronizing the sequence of excitation phases in respect to the actual rotor's position in order to optimize the torque characteristic of a driving system as that of the prior patent application No. 96830180.4.

According to the patent application No. 96830295.0, at each instant the three BJT or MOS half bridges, coupled in a star configuration to the respective three motor's phase windings, are driven in a PWM mode. Moreover, being CT the star center and Vcc the supply voltage, the CT assumes a voltage equal to Vcc/2, therefore the maximum voltage swing that is available on each motor's winding is limited to ±Vcc/2.

### OBJECT AND SUMMARY OF THE INVENTION

The object of the present invention is a driving system for multiphase brushless motors (generally N=3 phases) which at each instant cyclically applies an appropriate voltage on N-1 phase windings of the motor according to a PWM modulation, keeping one phase winding in either a low or a high saturation state (that is with a duty cycle of 100% or 0% respectively), according to the ensuing detailed description.

Therefore, during the time interval in which a phase winding is kept in a high or low saturation state, between the terminal of this winding and the CT there will be a voltage that is equal to those that are applied to the other (N-1) terminals (between the terminal of the winding and the CT), because the N windings connected in a star configuration constitute an intrinsically balanced electric system.

In such a driving system, being the PWM control applied only to N-1 windings at the time, while one winding is kept on a stable saturation state, a direct consequence is that switching losses are reduced by 1/N (as compared to a solution where all the N windings are simultaneously driven). Moreover, the driving system as a whole is simplified.

In addition, the modulation of the CT voltage that is obtained with this system allows for an enhanced maximum voltage swing on the terminals of the windings.

According to the present invention, the most effective profile of the driving waveform to be applied cyclically to the N-1 terminals of the motor's windings for producing the required differential voltage between each single phase winding and the CT or between winding and winding is determined.

Indeed, it can be demonstrated that a generic periodic profile f(t) referred to a phase terminal and the CT (or between phase terminal and phase terminal) may be obtained by applying to the motor's windings a certain voltage profile, referred to ground potential, properly computed as will be described hereinbelow for the case of a three-phase motor (N=3).

In such a sample case, the three voltages, each having its profile described by f(t), will have to be applied to the motor with a relative phase shift of 120°, thus constituting three profiles fᵢ(t), where i=1,2,3.

At any instant, there is always one of the three profiles fᵢ(t), i=1,2,3, that has a voltage, refereed to ground, lower than the other two. A function p(t) may be defined that at any instant assumes the lowest one of the values of the fᵢ(i) three functions, at that specific instant: ${\text{p(t)=min{f}}_{\text{1}} {\text{(t); f}}_{\text{2}} {\text{(t); f}}_{\text{3}} \text{(t)}}$.

The voltage profile, referred to ground potential, and to be applied to each phase windings is given by:${\text{g}}_{\text{i}} {\text{(t)=f}}_{\text{i}} \text{(t)-p(t) (i=1,2,3)}$

Similarly, it is possible to identify a function p'(t), such that ${\text{p'(t)=max{f}}_{\text{1}} {\text{(t); f}}_{\text{2}} \text{(t);}$ ${\text{f}}_{\text{3}} \text{(t)}}$, from which new profiles: g'ᵢ(t): ${\text{g'}}_{\text{i}} {\text{(t)=M-p'(t)+f}}_{\text{i}} \text{(t)}$, where M is the absolute maximum value of f(t) of the entire period, may be defined.

The profiles gᵢ(t) and g'ᵢ(t), thus obtained are the profiles that, according to the present invention, must be applied to the two phase windings that must be driven in that particular switching phase. The ensuing description thoroughly describes the case where f(t) is sinusoidal [$\text{f(t)=sin(t)}$] in a switching mode driving system, moreover in evaluating the storage of the digitized profiles, it will be assumed, by way of example, the use of 8-bits wide memory registers, notwithstanding the fact that the system may be easily expanded to the desired dimension.

### BRIEF DESCRIPTION OF THE DRAWINGS

The various aspects and advantages of the invention will become even clearer through the following description of the architecture and the functioning of a system of the invention, according to an embodiment thereof, and by referring to the annexed drawings, wherein is has been assumed to apply the invention to the case of a three-phase motor.
**Figure 1** represents the three sinusoidal voltage profiles (the voltage being referred to ground) that are cyclically applied to the three-phase windings of a brushless motor according to the driving method described in the prior patent application No. 96830295.0;
**Figure 2a** represents three voltage profiles (the voltage being referred to ground) that are cyclically applied to the three-phase windings of a brushless motor driven according to the present invention, maintaining in a low saturation state one of the three windings;
**Figure 2b** shows the sinusoidal waveform of the voltage on the terminal of the motor phase winding A deriving from the difference between the voltage that is being applied to this winding and the CT, when applying the profiles of Fig. 2a to the three-phase windings of the motor.
**Figures 3a and 3b** represent the voltage profiles of Fig. 2a, scaled by a factor ≅1.14 in order to fully exploit the available dynamic, from 0 to 255, when using 8-bit memory registers;
**Figures 4a and 4b** represent the three voltage profiles that are cyclically applied to the three-phase windings of a brushless motor according to the present invention, for maintaining in a high saturation condition one of the three windings and the sinusoidal shape of the voltage waveform on the terminal of the phase windings A of the motor deriving from the difference between the voltage being applied to this winding and the CT of the motor when applying the three profiles;
**Figure 5** is a block diagram of the system of the invention.

### DESCRIPTION OF AN EMBODIMENT OF THE INVENTION

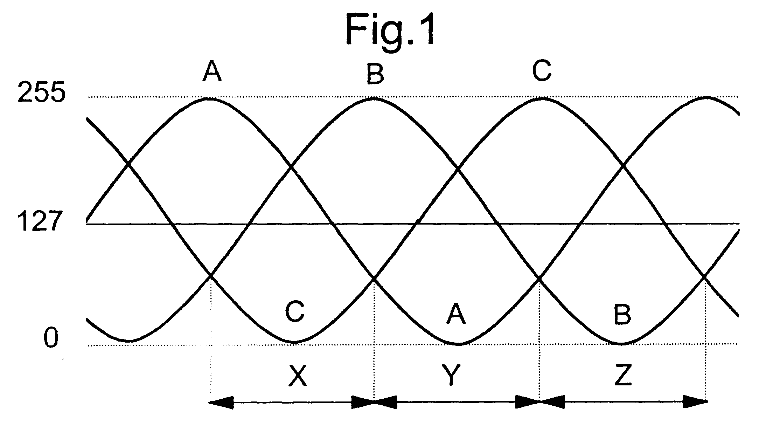

Fig. 1 portrays the voltage profiles that are cyclically applied to the three-phase windings (A, B, C) according to the driving system illustrated in the prior patent application No. 96830295.0 of the same applicant. In order to simplify the description, reference is made to sinusoidal profiles although the ensuing considerations remain obviously valid for the most general case of profiles resulting from Fourier sum of harmonics of a fundamental frequency.

The three profiles are numerically represented by samples whose value is expressed in the form of an 8-bit word; the zero voltage being equivalent to the number 127, while the positive peak and the negative peak correspond respectively to 255 and 0.

The figure also shows the intervals (X-Y-Z) whose duration is equal to 120 electrical degrees, during which one of the three profiles is lower than the other two.

At any instant it is possible to identify one phase winding on which there exist a voltage lower than the voltage present on the other two.

Precisely, according to Fig. 1, the phases with a lower voltage during the intervals X, Y, Z (each of a duration equal to 120 electrical degrees), are respectively the C, A and B phases.

According to the fundamental aspect of the present invention, during any switching phase one winding is kept cyclically in a completely low or high saturation state, while to the other N-1 windings certain voltage profiles capable of efficiently drive the motor are applied. In the illustrated example, which refers to the case of a three-phase brushless motor, during the X interval the phase winding to be kept in a stable saturation state is the C winding, during the Y interval is the A winding and during the Z interval is the B winding.

In the case of a three-phase motor and by assuming supposing a sinusoidal driving waveform, intended as a voltage applied between the winding terminal and the CT of the motor, the voltage profile that is applied to the two excited phase windings according to a PWM mode must be adequately recalculated, according to the following expressions:$\begin{matrix}\begin{matrix}\begin{matrix}\text{Interval X: C'=Ø; B' = sin(B) - sin(C); A' = sin(A) - sin(C)}\end{matrix} \\ \begin{matrix}\text{Interval Y: A'=Ø; B'=sin(B) - sin(A); C'=sin(C) - sin(A)}\end{matrix} \\ \begin{matrix}\text{Interval Z: B' = Ø; A'= sin(A) - sin(B); C'= sin(C) - sin(B)}\end{matrix}\end{matrix}\end{matrix}$

By considering the case of a three-phase brushless motor and a sinusoidal type of driving, it may be noticed that there exist three intervals wherein a voltage is lower that the others.

With a different number of motor's phases and/or driving profiles, there will be a different number of intervals during which one phase winding has a voltage lower than the others.

Because the voltage profiles must be stored in a memory, it is necessary to convert them in sequences of digital numerical samples (bytes, if an 8-bit memory is employed, as in the example considered) by scaling them by a factor 2ⁿ⁻¹ where n is the number of bits of the data to be stored in the memory.

Of course, the number of samples to discretize the voltage profile is arbitrary.

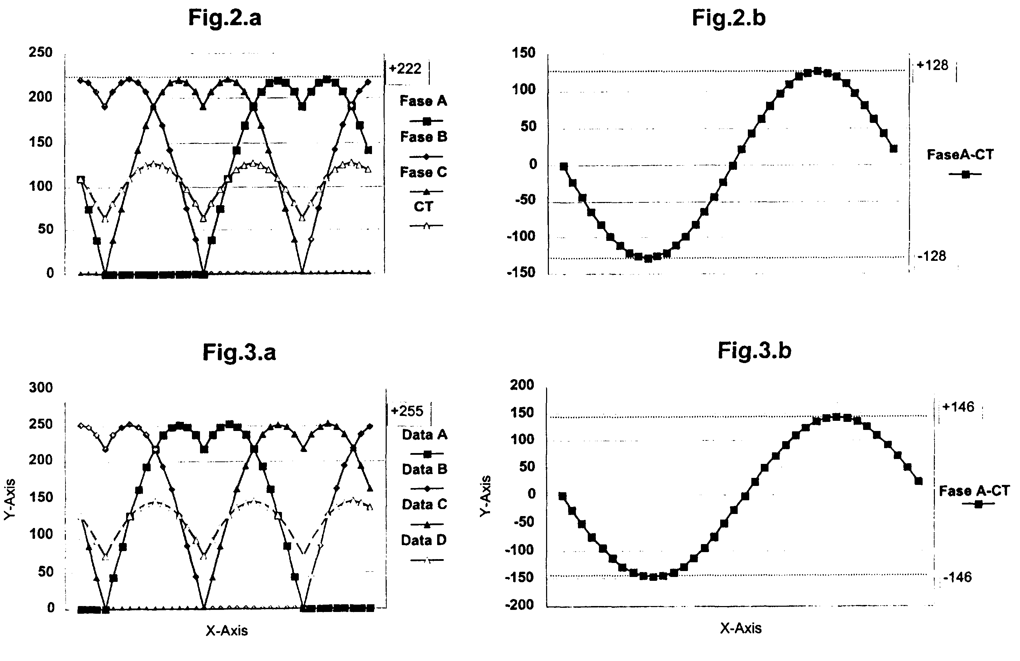

Fig. 2a refers to a three-phase sinusoidal driving system and graphically represents said profiles in terms of the digital numerical value (byte), hence it is evident that there exist always a low saturation phase switched every 120 electrical degrees according to the sequence C-A-B. It should be emphasized that all three-phases (windings) assume periodically a saturation state though only one of them is in that state at any instant.

By applying these new profiles to the star-configured three windings of a three-phase brushless motor, which as already said is a balanced system, the CT voltage profile, rather that remaining at a constant level (Vcc/2) as in the case of a pure sinusoidal driving system, as described in the patent application No. 96830295.0, is modulated according to the waveform depicted in Fig. 2a. The waveform of the CT, in a balanced three-phase balanced system in a star configuration, is given by a third of the sum of the three voltages applied to the three-phase windings.

By virtue of such a CT modulation, despite of the fact that a phase windings is cyclically kept in a fixed saturation state for 120 electrical degrees, at the terminals of all three motor's windings (between each phase terminal and CT) there are always three sinusoidal voltage profiles, out-of-phase among each other by 120 electrical degrees.

What shown in Fig. 2b, in relation to the voltage difference between the phase terminal A and the CT, it is also true for the voltage difference between the phase B and the CT and for the voltage difference between C and CT.

Therefore, the resulting voltage swing on the terminals of the single phase windings is equal to 256 (±128). This digitally expressed dynamic, when converted to an analog dynamic by way of a Byte-to-PWM converter and applied to a half bridge output stage functioning with a power supply of 12V, is equivalent to a dynamic of ±6V. This is equal to what is obtained with the driving system defined in the prior patent application No. 96830295.0 of the same applicant. However, while in the known system such a dynamic is obtained by way of three digital profiles from 0 to 255, according to the method of the present invention the same dynamic is obtained with digital profiles from 0 to 222 (Fig. 2a), always considering the profiles stored in 8-bit registers.

Hence, by scaling with a factor of about 1.14=255/222 the digital profiles of the present invention it is possible o exploit the whole available dynamic (0‗255), thus obtaining thus that the equivalent difference between the digital profile applied to a phase and the CT be equal to ±146. By converting this digital value into the equivalent analog voltage value, this is equal to ±6.84V, with the same supply voltage of 12V.

This is obtained because with the new profiles defined according to the present invention, the CT does not remains fixed at a certain potential, but its potential is modulated, as previously illustrated.

Figures 3a and 3b represent graphically what has just been described. The new profiles are stored exploiting the entire 0 to 255 dynamic as allowed by the 8-bits memory registers used in the example shown.

Thus the stored profile corresponds to the maximum voltage swing applicable to the phase windings.

Should the voltages be modulated to control the rotating speed of the motor, it will be necessary to scale down the voltages by a certain Kval factor, for example by way of a digital multiplier before feeding the scaled digital values to the Byte-to-PWM converters.

What has heretofore described for the case in which one of the three-phases must be kept in a low saturation state during the respective intervals, each of 120°, is perfectly applicable also to the case in which one of the three-phases must be kept in a high saturation state. This state of saturation will be imposed to the phase that at any interval has the highest voltage terminals as compared to the other two phases.

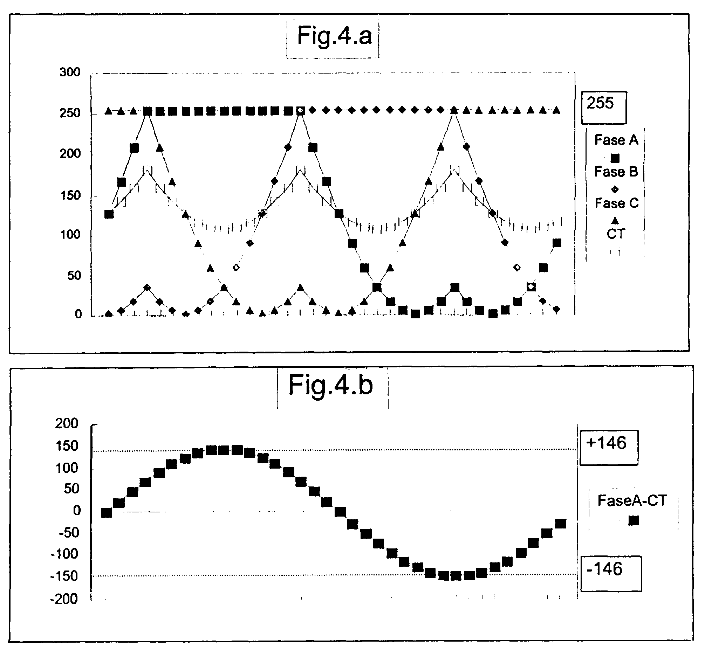

This alternative embodiment of the method of the invention is graphically shown in Figures 4a and 4b which only depict the profiles already scaled down to obtain the above noted increment of dynamics.

The choice of either a low or high fixed saturation profile may depend on the fact that in the first case the current circulates for a longer period of time in the low-side device of the relative half-bridge whereas in the second case the current circulates for a longer period of time in the high-side device of the relative half-bridge.

Therefore, it is possible to choose which devices of the half-bridges should work more. For example, if the half-bridges are integrated with a Pmos and Nmos pair (where the Pmos is the high-side device and Nmos is the low-side device), for the same silicon area of integration the Pmos has a Rdson greater than the Nmos thus, by selecting a low fixed saturation profile, the low-side device made by a lower channel resistance Nmos of the half-bridge will work more thus reducing the net power dissipated in the integrated circuit, being the power dissipated dependent from the MOS transistor resistance and by the cube of the current.

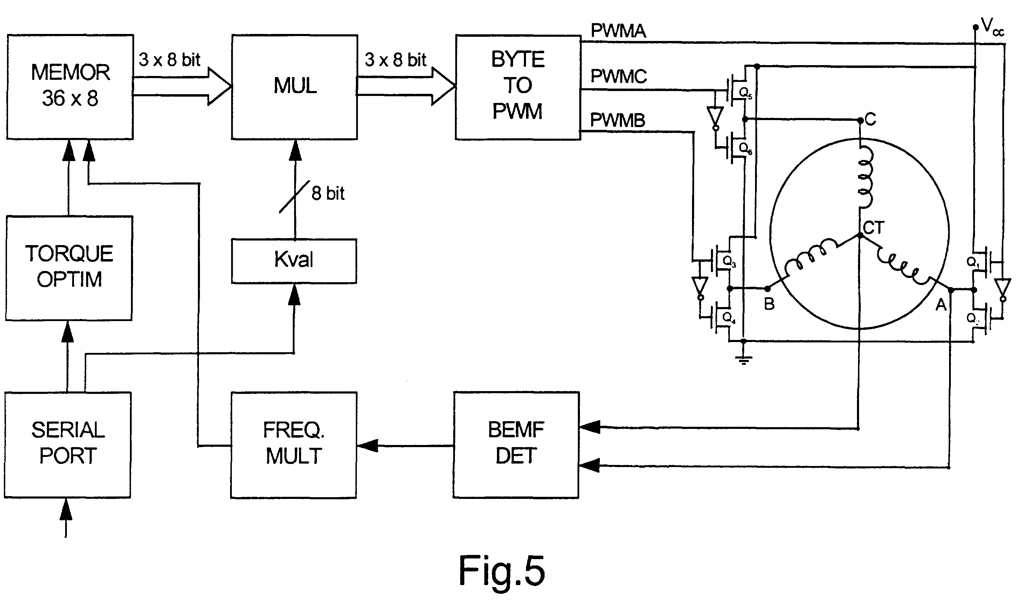

Fig. 5 shows a complete block diagram of a driving system of a brushless motor implementing the present invention.

The block MEMOR represents a memory (RAM, ROM, EPROM, ...) in which are stored the samples of the digital profiles, according to the method of the present invention.

The block MUL represents a digital multiplier that provides to scale down, by a factor contained in the register Kval each of the three samples (bytes) read from the memory.

The block BYTE-to-PWM performs a PWM conversion of the three samples, suitably scaled by the preceding block. The PWM three output signals of this block are fed to the inputs of the three half-bridge stages composed by the BJT or MOS (Q1, ..., Q6), which provide the necessary power gain. Each output node of the three half-bridges is connected to the terminal of a respective phase winding of the driven brushless motor.

When any one of the three digital values at the input of the converter block "Ø", the corresponding PWM output signal will have a duty cycle of 0%, implementing a state of low saturation of the respective half-bridge. When any one of the three digital values at the input of the converter block is equal to "255", the corresponding PWM output signal will have a 100% duty cycle, implementing a state of high saturation of the respective half-bridge.

The block BEMF DET detects the rotor's instantaneous position allowing for a correct synchronization between the switchings of the voltage applied to the three-phases with the position of the rotor.

The block FREQ MUL multiplies the frequency originating from the BEMF DET block by a factor equal to the number of samples with which the voltage profile contained in the memory is discretized. Such a multiplied frequency is utilized as clock for scanning the memory registers.

The register TORQUE OPTIM contains the starting address from which the scanning of the profile stored in the memory must start at the next zero cross assertion of the back electromotive force (BEMF).

The content of the TORQUE OPTIM and Kval registers may be loaded through a serial port, as schematized in the figure by the block SERIAL PORT.

The system herein described is based on the fact that, when opting to employ sinusoidal profiles to be applied to each phase terminal and the CT, every 120 electrical degrees one of the three-phases is alternatively kept in either a low or a high saturation state. This means that if from the memory comes a sample sequence corresponding to a portion of the profile corresponding to a low or high saturation (if high the profile portion will have samples of value "255" whereas if low the profile portion will have samples of value "Ø", in the case of an 8-bit memory), in the half-bridge of the associated phase windings the low-side or high-side transistor is kept ON (for a low or a high saturation, respectively), and the complementary transistor of the same half-bridge is kept OFF. Simultaneously, the other two half bridges are switched at the PWM frequency, with an suitable duty-cycle that corresponds to the value of the samples taken from the memory after scaling thereby the Kval factor.

For the case of a fixed state of low saturation:
- when phase A is in said state of saturation, the transistor Q2 is kept ON and Q1 is OFF, while Q3, Q4, Q5 and Q6 continuously switch between 0 and Vcc.
- when phase B is in said state of saturation, the transistor Q4 is kept ON and Q3 is OFF, while Q1, Q2, Q5 and Q6 continuously switch between 0 and Vcc.
- when phase C is in said state of saturation, the transistor Q6 is kept ON and Q5 is OFF, while Q1, Q2, Q3 and Q4 continuously switch between 0 and Vcc.

## Claims

1. A method of driving a multiphase brushless motor with N star-connected windings wherein all the N windings are driven according to a certain predefined periodic voltage profile intended as the differential voltage between the winding's terminal and the star center,
characterized by
cyclically keeping for a certain time interval one of the N windings in a fixed state of low or high saturation by applying to the other N-1 phase windings instantaneous voltages according to a profile such that the modulated voltage of the star center subtracted or added to the low or high saturation voltage applied to the terminal of said winding produce a resultant voltage on said winding of a value coherent with said predefined voltage profile.

2. The method of claim 1, characterized in that the number of intervals, in an entire electric period, in which said fixed high or low saturation state of one winding is produced, depends on the predefined driving profile and upon the number N of windings of the motor.

3. The method of driving a brushless motor in a PWM mode according to claim 1, by way of N half-bridge output stages, characterized in that at any instant one of the N half-bridge stages is kept in a fixed saturation state, low or high, while the other N-1 half bridge stages function in a switched PWM mode at the PWM frequency, with a duty-cycle varying, in function of a certain scaling of digital samples of said periodic voltage profile.
